# EUROPÄISCHE PATENTANMELDUNG

(11) **EP 1 475 462 A2**
(43) Veröffentlichungstag der Anmeldung: **10.11.2004**
(21) Anmeldenummer: 04010533.0
(22) Anmeldetag: 04.05.2004
(51) Int. Cl.: C25B 7/00

(54) **Verfahren zur Herstellung keramischer Formkörper**

(30) Priorität: 09.05.2003 DE 10320936
(71) Anmelder: C. HAFNER GmbH & Co., 75173 Pforzheim (DE)
(72) Erfinder: Clasen, Rolf, Prof. Dr., 66125 Saarbrücken-Dudweiler (DE); Tabellion, Jan, Dipl.-Ing., 66292 Riegelsberg (DE); Oetzel, Christian, Dipl.-Ing., 66292 Riegelsberg (DE)
(74) Vertreter: Dimmerling, Heinz, Dipl.-Ing.

(57) **Zusammenfassung**

Ein Verfahren zur Herstellung Zirkondioxid aufweisender vollkeramischer Grünkörper für dentale Anwendungen, aus welchen Formkörper mittels Sintern herstellbar sind, wobei den Grünkörpem zu Grunde liegende Abscheidekörper durch elektrophoretische Abscheidung von keramischen Partikeln aus einer Suspension gebildet werden, wobei eine der Elektroden für die elektrophoretische Abscheidung in der Suspension angeordnet ist, ist dadurch gekennzeichnet, daß die keramischen Partikel auf einer in der Suspension angeordneten porösen Form abgeschieden werden, welche die Form des jeweiligen Abscheidekörpers hat und eine mit einer elektrisch leitenden Flüssigkeit gefüllte Ausnehmung beziehungsweise einen mit einer elektrisch leitenden Flüssigkeit gefüllten Hohlraum aufweist, in der beziehungsweise in dem die andere Elektrode für die elektrophoretische Abscheidung angeordnet ist, wobei als Suspension eine wässrige Suspension verwendet wird, welche Zirkondioxid enthält und einen pH-Wert von 9,5 bis 13,0, insbesondere 9,5 bis 12,5, vorzugsweise 10,0 hat, beziehungsweise einen pH-Wert von 2,0 bis 5,0, insbesondere 2,5 bis 4,5, vorzugsweise 3,5 hat.

## Beschreibung

Die Erfindung betrifft ein Verfahren nach dem Oberbegriff des Anspruchs 1, zur Herstellung Zirkondioxid aufweisender vollkeramischer Grünkörper für dentale Anwendungen, aus welchen Formkörper mittels Sintern hergestellt werden, wobei die den Grünkörpem zu Grunde liegenden Abscheidekörper durch elektrophoretische Abscheidung von keramischen Partikeln aus einer Suspension gebildet werden, wobei eine der Elektroden für die elektrophoretische Abscheidung in der Suspension angeordnet ist.

Metallfreier vollkeramischer dentaler Zahnersatz hat sich in jüngster Vergangenheit als alternative Versorgung zur Vollmetall- sowie Verbundrestaurationen in der Kronen- und Brückenprothetik etabliert. Vor allem im sichtbaren Gebißbereich ist die deutlich verbesserte Ästhetik der vollkeramischen Zahnersatzteile ein wesentlicher Vorteil gegenüber den (teil-)metallischen Varianten. Darüber hinaus besitzen keramische Werkstoffe eine hohe Biokompatibilität.

Insbesondere hat sich in der Dentaltechnik Zirkondioxid als vollkeramischer Zahnersatz sehr gut bewährt. Zirkondioxid hat den Vorteil, daß es eine sehr hohe Festigkeit hat und darüber hinaus bei einer beispielsweise durch zu hohe Belastung entstandenen Rißbildung der Rißbildung durch Phasenumwandlung entgegenwirkt. Nachteilig bei Zirkondioxid ist lediglich die schwierige mechanische Bearbeitung insbesondere aus (dicht)gesintertem Zirkondioxid bestehender Formteile. Es ist daher wünschenswert, Zirkondioxid aufweisende Zahnersatzteile mittels eines elektrophoretischen Verfahrens herzustellen.

Unabhängig von der Verwendung des vollkeramischen Zahnersatzteils muß jedes Herstellungsverfahren mehrere grundlegende Anforderungen erfüllen. Wichtig ist vor allem die Paßgenauigkeit der prothetischen Versorgung auf dem präparierten Zahnstumpf. Es müssen sehr enge Toleranzen eingehalten werden. Darüber hinaus sollen die Anschaffungskosten der zur Herstellung der Formteile erforderlichen Geräte gering und das Herstellungsverfahren kostengünstig, schnell und möglichst einfach durchzuführen sein. Zusätzlich ist eine gute Kontrollierbarkeit und Reproduzierbarkeit des Verfahrens wichtig, auch um eine geringe Ausfallquote zu gewährleisten.

Aus der WO 99/50480 ist ein Verfahren gemäß dem Oberbegriff des Anspruchs 1 bekannt, bei welchem eine organische Suspension aus Keramikpartikeln in einem polaren organischen Lösemittel verwendet wird. Die Suspension befindet sich in einem Behälter, in welchem zwei Elektroden für die elektrophoretische Abscheidung angeordnet sind. In die Suspension ist ein mit Silberleitlack beschichteter Gipsabdruck eines präparierten Zahnstumpfes eingetaucht, welcher die Elektrode bildet, an der die elektrophoretische Abscheidung stattfindet. Durch Anlegen einer elektrischen Gleichspannung zwischen 50 und 400 Volt an die beiden Elektroden werden Keramikpartikel auf den Gipsabdruck abgeschieden, wodurch der Grünkörper gebildet wird. Der Grünkörper wird anschließend getrocknet, bei etwa 1200 Grad Celsius angesintert, anschließend mit einem Glasschlicker infiltriert und bei 1100 Grad Celsius gesintert.

Nachteilig bei dem bekannten Verfahren ist die Verwendung organischer Dispergiermittel, welche leicht entflammbar sind und eine große Toxizität haben. Darüber hinaus entstehen bei thermischen Verfahrensschritten häufig toxische Crack-Produkte der organischen Lösemittel. Es sind daher besondere Schutzmaßnahmen erforderlich. Des weiteren ist die Abscheiderate sehr gering, weshalb mit hohen Spannungen gearbeitet werden muß oder lange Abscheidedauern hingenommen werden müssen.

Aus der EP 0 200 242 A2 ist ein Verfahren zur Herstellung eines Glaskörpers bekannt, bei dem aus einer wässrigen Suspension mit hochdispersem Feststoffanteil ein poröser Grünkörper geformt und dieser anschließend gereinigt und gesintert wird, wobei der Grünkörper durch Trennung der Phasen der Suspension mittels Elektrophorese hergestellt wird.

Zur Vermeidung durch Bläschen hervorgerufener großer Poren im Grünkörper erfolgt bei dem aus der EP 0 200 242 A2 bekannten Verfahren die elektrophoretische Abscheidung nicht mehr auf einer Elektrode, sondern auf einer porösen Membran, welche zwischen den beiden Elektroden angeordnet ist. Die Membran kann die Form des herzustellenden Grünkörpers haben und besitzt Poren, die kleiner sind, als die abzuscheidenden Partikel. Nach Anlegen einer elektrischen Gleichspannung an die beiden Elektroden findet eine Abscheidung und damit Formgebung eines Grünkörpers an der Membran statt.

Der EP 0 200 242 A2 lassen sich keine Hinweise darauf entnehmen, daß mittels dem dort beschriebenen Verfahren auch aus Zirkondioxid bestehend keramische Formkörper abgeschieden werden könnten.

Es ist Aufgabe der Erfindung, ein eingangs genanntes Verfahren derart auszubilden, daß es zur Herstellung aus Zirkondioxid bestehender vollkeramischer Grünkörper hoher Dichte geeignet ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Verfahren zur Herstellung Zirkondioxid aufweisender vollkeramischer Grünkörper für dentale Anwendungen, aus welchen ein Formkörper mittels Sintern hergestellt wird, wobei die Grünkörper durch Trocknen von den Grünkörpem zu Grunde liegenden Abscheidekörpem durch elektrophoretische Abscheidung von keramischen Partikeln aus einer Suspension gebildet werden, wobei eine der Elektroden für die elektrophoretische Abscheidung in der Suspension angeordnet ist, dadurch gekennzeichnet, daß die keramischen Partikel auf einer in der Suspension angeordneten porösen Form abgeschieden werden, welche die Form des jeweiligen Abscheidekörpers hat und eine mit einer elektrisch leitenden Flüssigkeit gefüllte Ausnehmung beziehungsweise einen mit einer elektrisch leitenden Flüssigkeit gefüllten Hohlraum aufweist, in der beziehungsweise in dem die andere Elektrode für die elektrophoretische Abscheidung angeordnet ist, wobei als Suspension eine wässrige Suspension verwendet wird, welche Zirkondioxid enthält und einen pH-Wert von 9,5 bis 13,0, insbesondere 9,5 bis 12,0, vorzugsweise 10,0 hat, beziehungsweise einen pH-Wert von 2,0 bis 5,0, insbesondere 2,5 bis 4,0, vorzugsweise 3,5 hat.

Dadurch, daß die keramischen Partikel auf einer in der Suspension angeordneten porösen Form abgeschieden werden, welche die Form des Abscheidekörpers hat, wird auf einfache Weise durch elektrophoretische Abscheidung ein Abscheidekörper gebildet, dessen Geometrie gegebenenfalls bis auf sehr geringe Abweichungen der Geometrie des gewünschten Formkörpers entspricht. An dem so erhaltenen Abscheide- beziehungsweise Grün- beziehungsweise Formkörper sind gegebenenfalls nur noch sehr geringe Nacharbeiten vorzunehmen. Dies ist äußerst vorteilhaft, da, wie eingangs bereits erwähnt wurde, die mechanische Bearbeitung von (dicht)gesintertem Zirkondioxid sehr aufwendig ist.

Durch die Anordnung der anderen Elektrode für die elektrophoretische Abscheidung in der mit einer elektrisch leitenden Flüssigkeit gefüllten Ausnehmung beziehungsweise in dem mit einer elektrisch leitenden Flüssigkeit gefüllten Hohlraum, wird eine sehr gute Abscheidung von Zirkondioxid auf der Form erreicht. Dadurch, daß die Form porös ist, können bei einer elektrolytischen Zersetzung des Dispergiermediums Wasser entstehende Ionen sowie alle weiteren im System vorhandene freie Ionen die Form durchdringen, wodurch sie zur anderen Elektrode gelangen. Die durch Rekombination entstehende Gasblasen befinden sich somit an der anderen Elektrode und nicht an der Form. Hierdurch kann eine wässrige Suspension verwendet werden.

Denn die Gasblasen werden nicht in den Abscheidekörper eingebaut, so daß keine Fehlstellen in dem Abscheide- beziehungsweise Grünkörper entstehen. Dies ist insbesondere in der Dentaltechnik von sehr großem Vorteil. Die Verwendung von Wasser als Dispergiermittel ist darüber hinaus auch deshalb besonders vorteilhaft, da aufgrund dessen hohe Dielektrizitätskonstanten sehr hohe Abscheideraten erzielt werden können.

Durch die Einstellung eines pH-Wertes von etwa 9,5 bis 13, insbesondere etwa 9,5 bis 12,0, vorzugsweise etwa 10,0, läßt sich eine Abscheiderate erreichen, welche es ermöglicht, das Verfahren industriell anzuwenden. Wenngleich bei einem pH-Wert von etwa 2,0 bis 5,0, insbesondere etwa 2,5 bis 4,0, vorzugsweise etwa 3,5 auch immer noch eine Abscheiderate erreicht wird, die eine industrielle Nutzung des Verfahrens erlaubt, so ist die zuerst genannte Einstellung des pH-Werts doch zu bevorzugen.

Als sehr vorteilhaft hat sich eine Suspension herausgestellt, welche bei einem pH-Wert von 9,5 bis 13,0 ein Zeta-Potential von minus 30 bis minus 70, insbesondere minus 40 bis minus 70 hat beziehungsweise bei einem pH-Wert von 2,0 bis 5,0 ein Zeta-Potential von plus 30 bis plus 70, insbesondere plus 40 bis plus 70 hat. Hierdurch erhält die Dispersion eine niedrigere Viskosität und ist leichter verarbeitbar. Des weiteren wird eine verbesserte elektrophoretische Abscheidungsrate erhalten.

Ebenso ist es sehr vorteilhaft, wenn die elektrische Leitfähigkeit der Suspension zwischen 0,001 und 5 Millisiemens pro Zentimeter, insbesondere zwischen 0,001 und 3 Millisiemens pro Zentimeter, vorzugsweise zwischen 0,001 und 2 Millisiemens pro Zentimeter liegt. Die Viskosität der Suspension soll zwischen 1 und 1000 Millipascalsekunde, insbesondere zwischen 1 und 500 Millipascalsekunde liegen.

Des weiteren hat es sich als sehr vorteilhaft herausgestellt, der Suspension eine starke Base wie beispielsweise Tetramethylammoniumhydroxid (TMAH) oder Natriumhydroxid (NaOH) beziehungsweise eine starke Säure wie beispielsweise Salzsäure (HCl) zuzugeben. Hierdurch läßt sich auf einfache Weise der pH-Wert der Suspension einstellen.

Darüber hinaus hat es sich als sehr vorteilhaft herausgestellt, wenn der Suspension elektrosterisch wirkende Polyelektrolyte oder Dispergatoren wie Natrium- oder Ammoniumsalze langkettiger Polyacrylsäuren (Molekülkettenlänge M zwischen 5.000 und 100.000) in einer Menge von 0,5 bis 3, insbesondere 0,1 bis 1,0 Gewichtsprozent zugegeben werden. Hierdurch wird einerseits die Viskosität der Suspension herabgesetzt, wodurch der Füllgrad erhöht werden könnte. Ein erhöhter Füllgrad wiederum wirkt sich sehr vorteilhaft auf die Abscheiderate beziehungsweise die Dichte des Abscheidekörpers aus. Andererseits wird auch der isoelektrische Punkt der Zirkondioxid-Partikel zu niedrigeren pH-Werten verschoben. Dadurch erhält man ein Zeta-Potenzial höheren Betrages bereits bei einem pH-Wert von 9,5-11, so daß auch dort die Abscheidung möglich ist.

Mittels des erfindungsgemäßen Verfahrens kann ein Abscheide- beziehungsweise Grünkörper aus Zirkondioxid hergestellt werden, welcher eine sehr hohe Dichte hat und dadurch eine Geometrie aufweist, die der Geometrie eines gewünschten Formkörpers bis auf sehr geringe Abweichungen vollständig entspricht. Dies kann nur dadurch erreicht werden, da wegen der sehr hohen Dichte des Grünkörpers beim anschließenden Sintern nur noch eine sehr geringe Schrumpfung stattfindet. Durch die sehr geringe Schrumpfung können mechanische Nacharbeiten nahezu vollständig entfallen.

Als sehr vorteilhaft hat sich eine Ausführungsform der Erfindung herausgestellt, bei der bimodales Zirkondioxid mit Partikeln großer Korngröße und Partikeln kleiner Korngröße, welche bimodal verteilt sind, verwendet wird, wobei der mittlere Durchmesser der Partikel mit der großen Komgröße etwa 0,3 bis 100 Mikrometer und der mittlere Durchmesser der Partikel mit der kleinen Komgröße etwa 0,01 bis 1 Mikrometer beträgt. Hierdurch wird die bereits schon vorhandene sehr hohe Dichte des Abscheide- beziehungsweise Grünkörpers noch erhöht. Sehr vorteilhaft ist es hierbei auch, Zirkondioxid mit einer Zusammensetzung von etwa 75 bis 97 Gewichtsprozent, insbesondere etwa 90 bis 94 Gewichtsprozent, vorzugsweise etwa 92 Gewichtsprozent großer Korngröße und etwa 25 bis 3 Gewichtsprozent, insbesondere 6 bis 10 Gewichtsprozent, vorzugsweise 8 Gewichtsprozent Partikel kleiner Korngröße zu verwenden. Eine derartige Zusammensetzung wirkt sich nicht nur sehr vorteilhaft auf die Dichte des Abscheide- beziehungsweise Grünkörpers aus, sondern bewirkt auch noch einen sehr homogenen Abscheide- beziehungsweise Grünkörper. Darüber hinaus erhält der Abscheide- beziehungsweise Grünkörper eine hohe Festigkeit, wodurch er leichter zu handhaben ist.

Eine weitere Erhöhung der Dichte sowie Verbesserung der Homogenität des Abscheidekörpers kann noch dadurch erreicht werden, daß trimodales Zirkondioxid mit Partikeln größerer Korngröße, Partikeln mittlerer Komgröße und Partikeln kleinerer Komgröße, welche trimodal verteilt sind, verwendet wird, wobei der mittlere Durchmesser der Partikel mit der größeren Komgröße etwa 0,5 bis 100 Mikrometer, der mittlere Durchmesser der Partikel mit der mittleren Korngröße etwa 0,1 bis 1 Mikrometer und der mittlere Durchmesser der Partikel mit der kleineren Korngröße etwa 0,01 bis 0,1 Mikrometer beträgt. Hierbei hat sich eine Zusammensetzung aus etwa 70 bis 95 Gewichtsprozent, insbesondere etwa 85 bis 92 Gewichtsprozent, vorzugsweise 90 Gewichtsprozent der Partikel größerer Korngröße und etwa 3 bis 25 Gewichtsprozent, insbesondere etwa 3 bis 8 Gewichtsprozent, vorzugsweise 5 Gewichtsprozent Partikel mittlerer Komgröße und etwa 1 bis 12 Gewichtsprozent, insbesondere etwa 2 bis 6 Gewichtsprozent Partikel kleinerer Korngröße als sehr vorteilhaft herausgestellt.

Die Form der Partikel kann kugelförmig, würfelförmig oder plättchenförmig sein. Sehr vorteilhaft ist jedoch eine kugelförmige Geometrie. Die Pulverteilchen sollten vorzugsweise einen maximalen Anteil an Verunreinigungen von höchstens 3 Gewichtsprozent aufweisen. Ferner sollten sie eine möglichst geringe Wechselwirkung mit der Dispergierflüssigkeit zeigen. Es kann sowohl unstabilisiertes als auch teil- und vollstabilisiertes Pulver verwendet werden beziehungsweise Kombinationen davon. Als stabilisierendes Oxid kann vorzugsweise Ceroxid (CeO₂) und Yttriumoxid (Y₂O₃) verwendet werden.

Es ist sehr vorteilhaft, wenn das Pulver vor dem Dispergieren in die Suspension mehrfach mit einem unpolaren oder polaren, organischen oder anorganischen Lösungsmittel wie Alkohol, Ether, Ester, oder Wasser, insbesondere mehrfach destilliertem Wasser gereinigt wird.

Besonders vorteilhaft ist auch eine Ausführungsform der Erfindung, bei der Füllgrad der Suspension etwa 50 bis 95 Gewichtsprozent, insbesondere etwa 75 bis 90 Gewichtsprozent beträgt. Bei einem derartigen Füllgrad wird eine hohe Abscheiderate sowie ein äußerst dichter und homogener Abscheidekörper erhalten.

Sehr vorteilhaft ist es auch, wenn die mittlere elektrische Feldstärke zwischen der in der Suspension angeordneten Elektrode und der anderen Elektrode etwa 0,1 bis 50 Volt pro Zentimeter, insbesondere 0,5 bis 20 Volt pro Zentimeter, vorzugsweise 1 bis 5 Volt pro Zentimeter beträgt.

Bei einer weiteren besonderen Ausführungsform der Erfindung ist vorgesehen, daß als elektrisch leitende Flüssigkeit reines Wasser wie deionisiertes oder bidestilliertes Wasser verwendet wird. In vorteilhafter Weise sollte die elektrische Leitfähigkeit des Wassers kleiner als 100 Mikrosiemens pro Zentimeter sein. Zur Erhöhung der Leitfähigkeit können dann Säuren oder Basen, insbesondere Tetramethylammoniumhydroxid zugesetzt werden. Sehr vorteilhaft ist es, wenn soviel Additive hinzugefügt werden, bis das Verhältnis der Leitfähigkeit der elektrisch leitenden Flüssigkeit zur Leitfähigkeit der Suspension etwa 5 bis 50, insbesondere 10 bis 40 beträgt. Jedoch soll eine Leitfähigkeit von 100 Millisiemens pro Zentimeter nicht überschritten werden.

Überraschenderweise hat sich herausgestellt, daß die Poren der porösen Form nicht kleiner sein müssen, als die Keramikpartikel. Es lassen sich als Werkstoffe daher aushärtbare, poröse hydrophile Kunststoffe, Gipse oder poröse keramische Gerüste verwenden. Somit kann für die Herstellung der porösen Form auf kostengünstige, und gut verarbeitbare Werkstoffe zurückgegriffen werden.

Bei einer weiteren besonderen Ausführungsform der Erfindung ist vorgesehen, daß die in der Suspension angeordnete Elektrode so ausgebildet ist, daß sie in etwa überall denselben Abstand von der Oberfläche der porösen Form hat. Hierdurch wird ein Abscheidekörper mit sehr geringen Abweichungen in der Wanddicke und einer äußerst hohen Homogenität erhalten. Eine weitere Verbesserung dieser Eigenschaften kann noch dadurch erreicht werden, daß die in der Ausnehmung beziehungsweise in dem Hohlraum der Form angeordnete andere Elektrode so ausgebildet ist, daß sie überall denselben Abstand zur Oberfläche der porösen Form hat.

Besonders vorteilhaft ist auch eine Ausführungsform der Erfindung, bei der der abgeschiedene Körper beziehungsweise der Grünkörper elektrophoretisch nachverdichtet wird, wobei zur Nachverdichtung eine wässrige Suspension verwendet wird, welche ein keramisches Pulver aufweist, dessen Partikel kleiner als der mittlere Porendurchmesser des auf der Form abgeschiedenen Körpers sind. Hierdurch wird eine weitere Erhöhung der Dichte des Grünkörpers erreicht. Die Nachverdichtung kann unmittelbar im Anschluß an die elektrophoretische Abscheidung erfolgen. Als besonders vorteilhaft hat es sich jedoch herausgestellt, wenn der abgeschiedene Körper zunächst getrocknet und der hierdurch erhaltene Grünkörper nach dem Trocknen elektrophoretisch nachverdichtet wird.

Als Ausgangspulver für die Suspension zur elektrophoretischen Nachverdichtung des abgeschiedenen Körpers beziehungsweise des Grünkörpers können nanoskalige keramische Pulver mit einem D50-Wert zwischen 1 und 100 Nanometer, bevorzugt zwischen 1 und 50 Nanometer, verwendet werden, wenn die Poren des abgeschiedenen Körpers beziehungsweise des Grünkörpers einen mittleren Durchmesser von etwa 100 Nanometer haben. Als Ausgangsmaterial werden dabei bevorzugt Zirkondioxidpulver verwendet. Die Pulverteilchen sollten vorzugsweise einen Anteil an Verunreinigungen von höchstens 3 Gewichtsprozent aufweisen. Weiter vorzugsweise sollten sie ferner eine möglichst geringe Wechselwirkung mit dem Dispersionsmittel zeigen. Die Pulver können je nach Ausgangsmaterial in unterschiedlichem Maße dotiert sein. Beispielsweise können bei Verwendung von Zirkondioxidpulvern sowie teilals auch vollstabilisierte Pulver verwendet werden. Als stabilisierendes Oxid werden dabei vorzugsweise Ceroxid (CeO₂ und Yttriumoxid (Y₂O₃) verwendet.

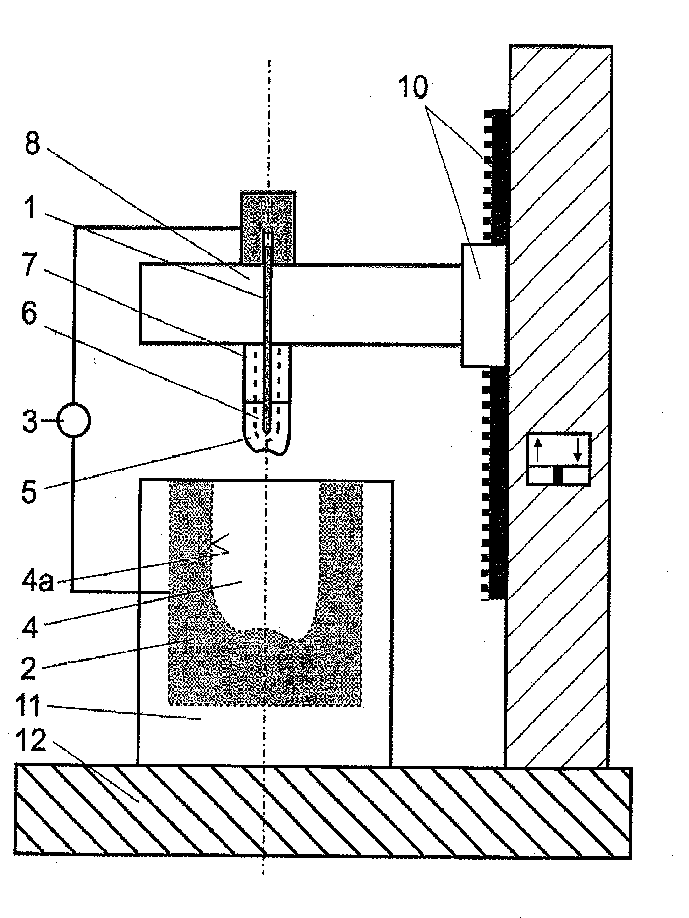

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung, sowie den Beispielen 1 bis 4.

Es zeigt die einzige Figur eine Anordnung zur Durchführung des erfindungsgemäßen Verfahrens.

Wie der Figur entnommen werden kann, weist die Anordnung eine domförmige Elektrode 1 auf, welche in einer als Ausgleichskammer bezeichenbare Ausnehmung 6 einer porösen Form 5 angeordnet ist. Die poröse Form 5 hat die Form eines mittels der Anordnung herzustellenden Grünkörpers. Sie ist mit Hilfe dentaltechnisch gängiger Methoden von einem Zahnstumpf abgeformt worden. Als Werkstoff wurde dabei ein gießfähiger, aushärtender und poröser Doublierwerkstoff wie Kunststoff oder vorzugsweise Gips, insbesondere expandierender Dentalgips verwendet.

Die poröse Form 5 ist an einer Haltevorrichtung 7 befestigt, durch welche sich die dornförmige Elektrode 1 erstreckt. Die Haltevorrichtung 7 besteht aus einem nicht porösen Werkstoff, vorzugsweise aus einem dielektrischen Werkstoff, insbesondere aus einem hydrophoben Polymer, an dessen Oberfläche keine elektrophoretische Abscheidung erfolgen kann.

Die Haltevorrichtung 7 ihrerseits ist an einer Halterung 8 befestigt, welche an einer elektrisch steuerbaren Lineareinheit 10 befestigt ist. Die Halterung 8 weist eine Öffnung auf, durch die sich die stabförmige Elektrode 1 erstreckt. Die dornförmige Elektrode 1 ist so befestigt, daß sie unterschiedlich tief in der Ausgleichskammer 6 angeordnet sein kann. An der der Haltevorrichtung 7 abgewandten Seite ist die stabförmige Elektrode 1 mit einer Gleichspannungsquelle 3 verbunden. Die stabförmige Elektrode 1 kann aus einem elektrisch leitfähigen Werkstoff wie beispielsweise Metall, Graphit oder leitfähiger Kunststoff bestehen. Vorzugsweise besteht die stabförmige Elektrode 1 aus einem nicht korrodierenden Stahl oder Edelmetall.

Unterhalb der porösen Form 5 ist eine Gegenelektrode 2 angeordnet, welche eine als Suspensionskammer bezeichenbare Ausnehmung 4 aufweist, deren Wandung der äußeren Geometrie der porösen Form 5 entspricht. Die Gegenelektrode 2 ist in einem elektrisch nicht leitenden Element 11 angeordnet, welches seinerseits auf einer Basisplatte 12 angeordnet ist. Hierdurch werden Einflüsse auf das zwischen der dornförmigen Elektrode 1 und der Gegenelektrode 2 während der elektrophoretischen Abscheidung bestehende elektrische Feld vermieden. Die Gegenelektrode 2 ist ebenfalls mit der Gleichspannungsquelle 3 verbunden.

Die Gegenelektrode 2 besteht aus einem metallischen Werkstoff, wie beispielsweise ein nicht korrodierender Stahl oder Edelmetall. Alternativ hierzu kann sie aber auch aus einem nichtmetallischen Material, vorzugsweise Gips oder ein polymerer Werkstoff, bestehen, welches mit einem elektrisch leitenden Lack, vorzugsweise Silberleitlack beschichtet ist.

Vor Anlegen einer elektrischen Spannung an die beiden Elektroden 1, 2 wird die poröse Form 5 vorzugsweise in der für die Suspension verwendeten Dispergierflüssigkeit getränkt und an der Haltevorrichtung 7 befestigt. Danach wird in die Ausnehmung 4 der Gegenelektrode 2 Suspension eingefüllt. Des weiteren wird die Ausgleichskammer 6 mit einer Ausgleichsflüssigkeit gefüllt. Der Meniskus beider Flüssigkeiten muß dabei über dem oberen Rand der porösen Form 5 liegen. Hierdurch wird eine Änderung der Wanddicke im Randbereich des abgeschiedenen Grünkörpers, verursacht durch ein verändertes elektrisches Feld an dieser Stelle, verhindert.

Anschließend wird die dornförmige Elektrode 1 in die Ausgleichsflüssigkeit getaucht derart, daß sie sich zentrisch in der Ausgleichskammer 6 befindet.

Im Anschluß daran wird die Halterung 8 mittels der elektrisch gesteuerten Lineareinheit 10 vertikal nach unten bewegt, so daß die poröse Form 5 zentrisch mit der Unterseite in die sich in der Ausnehmung 4 der Gegenelektrode 2 befindlichen Suspension taucht. Danach wird an die beiden Elektroden 1, 2 die Gleichspannung angelegt.

Nach dem Aufbau des elektrischen Gleichfeldes durch die Gleichspannungsquelle 3 wird an der Außenseite der porösen Form 5 ein Grünkörper abgeschieden. Nach Aufhebung des elektrischen Gleichfeldes wird mit Hilfe der elektrisch gesteuerten Lineareinheit 10 die Halterung 8 vertikal nach oben bewegt und damit der Grünkörper aus der Suspension entfernt.

Der abgeschiedene Grünkörper wird zwischen zehn und sechzig Minuten auf der porösen Form 5 getrocknet. Dies kann entweder an Luft oder unter kontrollierter Atmosphäre geschehen. Anschließend wird der Grünkörper entformt und weiter, entweder an Luft oder unter kontrollierter Atmosphäre, getrocknet. Nach vollständiger Trocknung wird der Grünkörper gesintert.

Bei der elektrophoretischen Abscheidung wird zwischen den Elektroden 1, 2 eine elektrische Gleichspannung von 2 bis 200 V angelegt, wodurch sich eine mittlere elektrische Feldstärke von 1 bis 5 V/cm ausbildet. Durch die der porösen Form 5 angepaßte Form der Suspensionskammer 4 herrscht an jeder Stelle der Oberfläche des Filterwerkstoffes näherungsweise das gleiche elektrische Feld, wodurch der abgeschiedene Grünkörper eine homogene Wanddicke bekommt.

Durch die in Richtung der domförmigen Elektrode 1 wirkende elektrophoretische Kraft werden die in der Suspension befindlichen, dispergierten keramischen oberflächengeladenen Teilchen in Richtung der Membran 5 bewegt und dort abgeschieden. Die Bildung des Grünkörpers erfolgt, wenn die auf die Teilchen wirkenden attraktiven Kräfte, in erster Linie die elektrophoretische Kraft, die repulsiven Kräfte übersteigen. Die elektrophoretische Kraft hängt dabei vor allem vom elektrischen Feld, der Dielektrizitätszahl des Dispergiermediums und dem Zetapotential der dispergierten keramischen Teilchen ab.

Die Eigenschaften des resultierenden Grünkörpers wie Gründichte und Wanddicke werden neben den genannten Prozeßparametern vom Füllgrad der Suspension, mittlerem Teilchendurchmesser der Pulver und Ähnlichem beeinflußt. Bei der elektrophoretischen Abscheidung spielen darüber hinaus osmotische und elektroosmotische Effekte eine Rolle. Daher ist die Leitfähigkeit der Ausgleichsflüssigkeit ein zusätzlicher Einflußparameter. Darüber hinaus beeinflussen die Eigenschaften des Werkstoffes der Membran 5 wie vor allem Porenradienverteilung und Gründichte, die elektrophoretische Abscheidung der Teilchen.

Der Prozeß ist dadurch gekennzeichnet, daß die Abscheideraten zwischen 0,1 und 10,0 g/min·cm², bevorzugt zwischen 0,2 und 1,0 g/min·cm² liegen.

Mit den beschriebenen Parametern der elektrophoretischen Abscheidung, den Eigenschaften der verwendeten Pulver und daraus hergestellten Suspensionen lassen sich Grünkörper mit einer sehr guten mikrostrukturellen Homogenität und ausreichender Grünfestigkeit herstellen. Die maximale Wanddickenabweichung liegt zwischen 2 und 10 %. Es lassen sich Grünkörper mit relativen Gründichten zwischen 50 und über 75 % der theoretischen Dichte herstellen.

Die so erhalten Grünkörper werden abschließend dichtgesintert. Die Sinterung erfolgt dabei in herkömmlichen Sinteröfen bzw. mittels Laser- oder Mikrowellenerhitzung. Die zur Sinterung notwendigen Temperaturen liegen in Abhängigkeit vom Ausgangsmaterial ZrO₂ zwischen 1300 °C und 1700 °C. Das Sinterverhalten ist dabei abhängig von der relativen Gründichte, vom Anteil an nanoskaligen Partikeln im Grünkörper und von ggf. zugegebenen Sinteradditiven. Auf diese Weise lassen sich vollkeramische Zahnersatzteile mit einer relativen Dichte von über 98 % der theoretischen Dichte herstellen.

Optional kann zur Erhöhung der Gründichte der getrocknete, ggf. angesinterte Grünkörper elektrophoretisch nachverdichtet werden. Die Nachverdichtung erfolgt bei gleichem Versuchsaufbau durch die elektrophoretische Imprägnierung der offenporigen Grünkörper mit niedrig gefüllten, nanoskaligen Suspensionen.

### Beispiel 1:

In einen 300 ml Kunststoffbecher wurde 50 g bidestilliertes Wasser eingefüllt. Des weiteren wurde 0,015 Gew.-% Tetramethylammoniumhydroxid (TMAH) zugegeben. Mit Hilfe eines handelsüblichen Dissolvers wurden 307,2 g cerdotiertes Zirkonoxidpulver (15,5 Gew.-% Ceroxid dotiert, mittlere Teilchengröße 3 µm) eingerührt. Die so hergestellte Suspension hatte dementsprechend einen Feststoffgehalt von 88,0 Gew.-%, die Viskosität lag bei einer Drehzahl von 24 Umdrehungen pro Minute bei 129 mPa·s, die spezifische elektrische Leitfähigkeit betrug 8,4 mS/cm und der pH-Wert lag bei 13.

Die so hergestellte Suspension wurde in die Abscheidekammer 4 eingefüllt. Die Ausgleichskammer 6 wurde mit bidestilliertem Wasser, versetzt mit 0,018 Gew.-% TMAH, befüllt. Als Material für die poröse Form 5 wurde ein expandierender Gips verwendet. Diese wurde vor der Abscheidung ca. 5 min in bidestilliertem Wasser getränkt, um kapillare Effekte zu vermeiden. Die Abscheidung wurde in diesem Beispiel anodisch durchgeführt. Der Abstand zwischen Anode und Kathode betrug 14 mm. An den Elektroden wurde eine elektrische Gleichspannung von 15 V für die Dauer von 3 min angelegt.

Nach der elektrophoretischen Abscheidung wurde der Grünkörper an der Gipsform ca. 30 min getrocknet und anschließend entformt. Die rißfreie Entformung der abgeschiedenen Zahnkappe vom Gipsstumpf erwies sich als schwierig, da die Grünfestigkeit bei Verwendung einer Suspension mit rein mikroskaligem Pulver gering ist. Anhand von REM-Aufnahmen konnte die blasenfreie Abscheidung der Zahnkappe nachgewiesen werden. Darüber hinaus ergab sich eine maximale Wanddickenabweichung von etwa 5 %. Die mit Hilfe des Archimedischen Prinzips bestimmte relative Gründichte betrug 58,9 %.

Der so hergestellte und getrocknete Grünkörper wurde bei 1750 °C in einem herkömmlichen Sinterofen gesintert. Die Haltezeit betrug dabei 3 Stunden bei einer Aufheizrate von 6 °C/min. Die dadurch hergestellte Zahnkappe wies eine relative Dichte von 90 % auf. Der lineare Schrumpf betrug 10%.

### Beispiel 2:

In einen 300 ml Kunststoffbecher wurde 50 g bidestilliertes Wasser eingefüllt. Zur Einstellung des pH auf einen Wert von 11 wurde 0,015 Gew.-% Tetramethylammoniumhydroxid (TMAH) zugegeben. Als Dispergierhilfsmittel wurde 0,4 g Natriumsalz einer Polyacrylsäure zugegeben, was einem Gehalt von 1,5 Gew.-% dwb entspricht. Mit Hilfe eines handelsüblichen Dissolvers wurden 26,92 g yttriumdotiertes nanoskaliges Zirkonoxidpulver (5 Gew.-% Yttriumoxid dotiert, mittlere Teilchengröße 12 nm) eingerührt. Die so hergestellte Suspension hatte dementsprechend einen Feststoffgehalt von 35,0 Gew.-%, die spezifische elektrische Leitfähigkeit betrug 2,0 mS/cm und der pH-Wert lag bei 9,6.

Die so hergestellte Suspension wurde in die Abscheidekammer 4 eingefüllt. Die Ausgleichskammer 6 wurde mit bidestilliertem Wasser, versetzt mit 0,018 Gew.-% TMAH, befüllt. Als Material für die poröse Form 5 wurde ein expandierender Gips verwendet. Diese wurde vor der Abscheidung ca. 5 min in bidestilliertem Wasser getränkt, um kapillare Effekte zu vermeiden. Die Abscheidung wurde in diesem Beispiel anodisch durchgeführt. Der Abstand zwischen Anode und Kathode betrug 14 mm. An den Elektroden wurde eine elektrische Gleichspannung von 15 V für die Dauer von 3 min angelegt.

Nach der elektrophoretischen Abscheidung wurde der Grünkörper an der Gipsform ca. 20 min getrocknet und anschließend entformt. Anhand von REM-Aufnahmen konnte die blasenfreie Abscheidung der Zahnkappe nachgewiesen werden. Darüber hinaus ergab sich eine maximale Wanddickenabweichung von etwa 5 %. Die mit Hilfe des Archimedischen Prinzips bestimmte relative Gründichte betrug 33,5 %.

Der so hergestellte und getrocknete Grünkörper wurde bei 1.400 °C unter oxidierender Atmosphäre gesintert. Die Haltezeit betrug dabei 3 Stunden bei einer Aufheizrate von 6°C/min. Die dadurch hergestellte Zahnkappe wies eine relative Dichte von 95 % auf. Der lineare Schrumpf betrug 27 %. Der durch die Verwendung von reinem Nanopulver hohe Trocken- und Sinterschrumpf läßt sich durch die Verwendung von expandierendem Gips kaum noch kompensieren.

### Beispiel 3:

In einen 300 ml Kunststoffbecher wurde 50 g bidestilliertes Wasser eingefüllt. Zur Einstellung des pH auf einen Wert von 11 wurde 0,015 Gewichtsprozent TMAH zugegeben. Als Dispergierhilfsmittel wurde 0,51 g Ammoniumsalz einer Polyacrylsäure zugegeben, was einem Gehalt von 0,18 Gewichtsprozent dwb entspricht. Mit Hilfe eines handelsüblichen Dissolvers wurde zunächst 224,7 g undotiertem Zirkonoxidpulver (5 Gew.-% Yttriumoxid dotiert, mittlere Teilchengröße 12 nm) eingerührt. Anschließend wurde 260,7 g cerdotiertes Zirkonoxid (15,5 Gew.-% Ceroxid dotiert, mittlere Teilchengröße 3 µm) in die Suspension eingerührt. Die so hergestellte Suspension hatte dementsprechend einen Feststoffgehalt von 85,0 Gew.-% mit einem Nanopulveranteil von 8 Gew.-% dwb. Die Viskosität lag bei einer Drehzahl von 64 Umdrehungen pro Minute bei 600 mPa·s, die spezifische elektrische Leitfähigkeit betrug 0,88 mS/cm und der pH-Wert lag bei 8,2.

Die so hergestellte Suspension wurde in die Abscheidekammer 4 eingefüllt. Die Ausgleichskammer 6 wurde mit bidestilliertem Wasser, versetzt mit 0,2 Gew.-% TMAH befüllt. Als Material für die poröse Form 5 wurde ein Expansionsgips der Firma Giulini verwendet. Diese wurde vor der Abscheidung ca. 5 min in bidestilliertem Wasser getränkt, um kapillare Effekte zu vermeiden. Die Abscheidung wurde in diesem Beispiel anodisch durchgeführt. Der Abstand zwischen Anode und Kathode betrug 14 mm. An den Elektroden wurde eine elektrische Gleichspannung von 15 V für die Dauer von 3 min angelegt.

Nach der elektrophoretischen Abscheidung wurde der Grünkörper an der Gipsform ca. 30 min getrocknet und anschließend entformt. Die Grünfestigkeit war im Vergleich zu der im Beispiel 1 beschriebenen, aus einer Suspension mit reinem cerdotiertes Zirkonoxidpulver (mittlere Teilchengröße 3 µm) abgeschiedenen Kappe deutlich höher. Daher war die Entformung problemlos. Anhand von REM-Aufnahmen konnte die blasenfreie Abscheidung der Zahnkappe nachgewiesen werden. Es ergab sich eine maximale Wanddickenabweichung von etwa 5 %. Die mit Hilfe des Archimedischen Prinzips bestimmte relative Gründichte betrug 73,3 %.

Der so hergestellte und getrocknete Grünkörper wurde bei 1.750 °C unter oxidierender Atmosphäre gesintert. Die Haltezeit betrug dabei 3 Stunden bei einer Aufheizrate von 6°C/min. Die dadurch hergestellte Zahnkappe wies eine relative Dichte von 98 % auf. Der lineare Schrumpf betrug 10%.

### Beispiel 4:

In einen 300 ml Kunststoffbecher wurde 50 g bidestilliertes Wasser eingefüllt. Zur Einstellung des pH auf einen Wert von 11 wurde 0,015 Gew.-% Tetramethylammoniumhydroxid (TMAH) zugegeben. Als Dispergierhilfsmittel wurde 0,51 g Ammoniumsalz einer Polyacrylsäure zugegeben, was einem Gehalt von 0,18 Gew.-% dwb entspricht. Mit Hilfe eines handelsüblichen Dissolvers wurde zunächst 5,7 g yttriumdotiertes nanoskaliges Zirkonoxidpulver (5 Gew.-% Yttriumoxid dotiert, mittlere Teilchengröße 12 nm) eingerührt. Danach wurde 17,0 g yttriumdotiertes Zirkonoxidpulver (5 Gew.-% Yttriumoxid dotiert, mittlere Teilchengröße 0,5 µm) in die Suspension eingerührt. Anschließend wurde unter den selben Bedingungen 260,7 cerdotiertes Zirkonoxidpulver (mittlere Teilchengröße 3 µm) eingerührt und dispergiert.

Die so hergestellte Suspension hatte dementsprechend einen Feststoffgehalt von 86,0 Gew.-% mit einem Nanopulveranteil von 2 Gew.-% dwb und einem Submikrometerpulveranteil von 6 Gew.-% dwb. Die Viskosität lag bei 420 mPa·s, die spezifische elektrische Leitfähigkeit betrug 0,95 µS/cm und der pH-Wert lag bei 9,3.

Die so hergestellte Suspension wurde in die Abscheidekammer 4 eingefüllt. Die Ausgleichskammer 6 wurde mit bidestilliertem Wasser, versetzt mit 0,018 Gew.-% TMAH befüllt. Als Material für die poröse Form 5 wurde ein expandierender Gips verwendet. Diese wurde vor der Abscheidung ca. 5 min in bidestilliertem Wasser getränkt, um kapillare Effekte zu vermeiden. Die Abscheidung wurde in diesem Beispiel anodisch durchgeführt. Der Abstand zwischen Anode und Kathode betrug 14 mm. An den Elektroden wurde eine elektrische Gleichspannung von 15 V für die Dauer von 3 min angelegt.

Nach der elektrophoretischen Abscheidung wurde der Grünkörper an der Gipsform ca. 30 min getrocknet und anschließend entformt. Die Grünfestigkeit war im Vergleich zu der im Beispiel 1 beschriebenen, aus einer Suspension mit reinem cerdotiertes Zirkonoxidpulver (mittlere Teilchengröße 3 µm) abgeschiedenen Kappe deutlich höher. Daher war die Entformung problemlos. Anhand von REM-Aufnahmen konnte die blasenfreie Abscheidung der Zahnkappe nachgewiesen werden. Es ergab sich eine maximale Wanddickenabweichung von etwa 5 %. Die mit Hilfe des Archimedischen Prinzips bestimmte relative Gründichte betrug 75 %.

Der so hergestellte und getrocknete Grünkörper wurde bei 1.750 °C unter oxidierender Atmosphäre gesintert. Die Haltezeit betrug dabei 3 Stunden bei einer Aufheizrate von 6°C/min. Die dadurch hergestellte Zahnkappe wies eine relative Dichte von 98 % auf. Der lineare Schrumpf betrug 9 %.

## Patentansprüche

1. Verfahren zur Herstellung Zirkondioxid aufweisender vollkeramischer Grünkörper für dentale Anwendungen, aus welchen Formkörper mittels Sintern herstellbar sind, wobei den Grünkörpern zu Grunde liegende Abscheidekörper durch elektrophoretische Abscheidung von keramischen Partikeln aus einer Suspension gebildet werden, wobei eine der Elektroden für die elektrophoretische Abscheidung in der Suspension angeordnet ist,
**dadurch gekennzeichnet,**
**daß** die keramischen Partikel auf einer in der Suspension angeordneten porösen Form abgeschieden werden, welche die Form des jeweiligen Abscheidekörpers hat und eine mit einer elektrisch leitenden Flüssigkeit gefüllte Ausnehmung beziehungsweise einen mit einer elektrisch leitenden Flüssigkeit gefüllten Hohlraum aufweist, in der beziehungsweise in dem die andere Elektrode für die elektrophoretische Abscheidung angeordnet ist, wobei als Suspension eine wässrige Suspension verwendet wird, welche Zirkondioxid enthält und einen pH-Wert von 9,5 bis 13,0, insbesondere 9,5 bis 12,5, vorzugsweise 10,0 hat, beziehungsweise einen pH-Wert von 2,0 bis 5,0, insbesondere 2,5 bis 4,5, vorzugsweise 3,5 hat.

2. Verfahren nach Anspruch 1,
**dadurch gekennzeichnet,**
**daß** bimodales Zirkondioxid mit Partikeln großer Korngröße und Partikeln kleiner Korngröße verwendet wird, wobei der mittlere Durchmesser der Partikel mit der großen Korngröße etwa 0,3 bis 100 Mikrometer und der mittlere Durchmesser der Partikel mit der kleinen Korngröße etwa 0,01 bis 1 Mikrometer beträgt.

3. Verfahren nach Anspruch 2,
**dadurch gekennzeichnet,**
**daß** das bimodale Zirkondioxid aus einer Zusammensetzung von etwa 75 bis 97 Gewichtsprozent, insbesondere etwa 90 bis 94 Gewichtsprozent, vorzugsweise etwa 92 Gewichtsprozent Partikeln großer Komgröße und etwa 25 bis 3 Gewichtsprozent, insbesondere etwa 6 bis 10 Gewichtsprozent, vorzugsweise etwa 8 Gewichtsprozent Partikeln kleiner Korngröße besteht.

4. Verfahren nach Anspruch 1,
**dadurch gekennzeichnet,**
**daß** trimodales Zirkondioxid mit Partikeln größerer Korngröße, Partikeln mittlerer Korngröße und Partikeln kleinerer Komgröße verwendet wird, wobei der mittlere Durchmesser der Partikel mit der größeren Komgröße etwa 0,5 bis 100 Mikrometer und der mittlere Durchmesser der Partikel mit der mittleren Korngröße etwa 0,1 bis 1 Mikrometer und der mittlere Durchmesser der Partikel mit der kleineren Korngröße etwa 0,01 bis 0,1 Mikrometer beträgt.

5. Verfahren nach Anspruch 4,
**dadurch gekennzeichnet,**
**daß** das trimodale Zirkondioxid aus einer Zusammensetzung von etwa 70 bis 95 Gewichtsprozent, insbesondere etwa 85 bis 92 Gewichtsprozent, vorzugsweise 90 Gewichtsprozent Partikeln größerer Komgröße und etwa 3 bis 25 Gewichtsprozent, insbesondere etwa 3 bis 8 Gewichtsprozent, vorzugsweise etwa 5 Gewichtsprozent Partikeln mittlerer Korngröße und etwa 1 bis 12 Gewichtsprozent, insbesondere etwa 2 bis 6 Gewichtsprozent Partikeln kleinerer Korngröße besteht.

6. Verfahren nach einem der Ansprüche 2 bis 5,
**dadurch gekennzeichnet,**
**daß** der Füllgrad der Suspension etwa 50 bis 95 Gewichtsprozent, insbesondere etwa 75 bis 90 Gewichtsprozent beträgt.

7. Verfahren nach einem der Ansprüche 1 bis 6,
**dadurch gekennzeichnet,**
**daß** die mittlere elektrische Feldstärke zwischen der in der Suspension angeordneten Elektrode und der anderen Elektrode etwa 0,1 bis 50 Volt pro Zentimeter, insbesondere 0,5 bis 20 Volt pro Zentimeter, vorzugsweise 1,0 bis 5,0 Volt pro Zentimeter beträgt.

8. Verfahren nach einem der Ansprüche 1 bis 7, ,
**dadurch gekennzeichnet,**
**daß** die elektrisch leitende Flüssigkeit reines Wasser wie deionisiertes oder bidestilliertes Wasser aufweist.

9. Verfahren nach einem der Ansprüche 1 bis 8,
**dadurch gekennzeichnet,**
**daß** das Verhältnis der Leitfähigkeit der elektrisch leitenden Flüssigkeit zur Leitfähigkeit der Suspension etwa 5 bis 50, insbesondere 10 bis 40 beträgt, beziehungsweise 0,1 bis 0,3 betragt.

10. Verfahren nach einem der Ansprüche 1 bis 9,
**dadurch gekennzeichnet,**
**daß** die Suspension eine starke Basis wie Tetramethylammoniumhydroxid (TMAH) beziehungsweise eine starke Säure wie Salzsäure (HCl) aufweist.

11. Verfahren nach einem der Ansprüche 1 bis 10,
**dadurch gekennzeichnet,**
**daß** die Form aus einem modulierfähigen, aushärtenden und porösen Doublierwerkstoff besteht.

12. Verfahren nach einem der Ansprüche 1 bis 11,
**dadurch gekennzeichnet,**
**daß** die in der Suspension angeordnete Elektrode so ausgebildet ist, daß sie etwa überall denselben Abstand von der Oberfläche der Form hat.

13. Verfahren nach einem der Ansprüche 1 bis 12,
**dadurch gekennzeichnet,**
**daß** der Abscheidekörper beziehungsweise der Grünkörper elektrophoretisch nachverdichtet wird, wobei zur Nachverdichtung eine wässrige Suspension verwendet wird, welche keramische Partikel aufweist, welche kleiner als der mittlere Porendurchmesser des auf der Form abgeschiedenen Körpers sind.
